# EUROPEAN PATENT APPLICATION

(11) **EP 4 404 331 A1**
(43) Date of publication of application: **24.07.2024**
(21) Application number: 22918202.7
(22) Date of filing: 01.09.2022
(51) Int. Cl.: H01M 10/613, H01M 10/6566

(54) **AIR COOLING STRUCTURE AND BATTERY PACK**

(30) Priority: 06.01.2022 CN 202210019617
(71) Applicant: Sunwoda Mobility Energy Technology Co., Ltd., Shenzhen, Guangdong 518107 (CN)
(72) Inventor: HUA, Huangwei, Shenzhen, Guangdong 518107 (CN); WANG, Tianfu, Shenzhen, Guangdong 518107 (CN); CHEN, Binbin, Shenzhen, Guangdong 518107 (CN); WANG, Huawen, Shenzhen, Guangdong 518107 (CN)
(74) Representative: Puchberger & Partner Patentanwälte
(86) International application number: PCT/CN2022/116396
(87) International publication number: WO 2023/130747

(57) **Abstract**

This application discloses an air cooling structure and a battery pack. The air cooling structure includes: a lower box body, provided with an air inlet and an air outlet; and an air duct cover plate, fixed at a bottom of the lower box body, an air inlet duct and an air outlet duct that are independent from each other being formed between the air duct cover plate and the lower box body. The air inlet duct is communicated with the air inlet, and the air outlet duct is communicated with the air outlet. The air duct cover plate is provided with a module air inlet communicated with the air inlet duct and a module air outlet communicated with the air outlet duct. An air flow in the air inlet duct is configured to flow out of the module air inlet and then flow back to the air outlet duct through the module air outlet. By means of such design, battery cells in a battery pack can be cooled in different areas, the cooling efficiency is improved, and the battery cell cooling requirement under high power is met. Moreover, the air duct cover plate is integrated at the bottom of the lower box body, so that the occupied space in the lower box body can be reduced, and the energy density of the whole pack can be improved. In addition, different air duct flow directions can be formed according to cooling requirements of different positions, and distributed accurate heat control is carried out.

## Description

### CROSS-REFERENCE TO RELATED APPLICATION

This application claims priority to Chinese patent application No. 202210019617.2, entitled "AIR COOLING STRUCTURE AND BATTERY PACK", filed with the China National Intellectual Property Administration on January 6, 2022, the disclosure of which is hereby incorporated by reference in its entirety.

### TECHNICAL FIELD

This application relates to the field of power battery technologies, and specifically to an air cooling structure and a battery pack.

### BACKGROUND

Currently, with an increasing requirement of battery endurance, battery capacity increases, and excessive heat accumulated when battery cells in a battery pack work severely affects the service life of the battery cells. A cooling system needs to be designed for the battery pack to reduce the temperature of the battery cells. Cooling manners mainly include liquid cooling, direct cooling, immersion, and air cooling. The cooling manners of liquid cooling, direct cooling, and immersion have high costs. Currently, an air cooling channel with low costs is usually designed in a battery pack.

However, in an existing battery pack, an air cooling channel has an ordinary cooling effect on battery cells, can only adapt to a cooling requirement of low-power battery cells, and occupies a large space in the battery pack, affecting an increase in the energy density of the whole battery pack.

### SUMMARY OF THE INVENTION

Therefore, a technical problem to be resolved by this application is to overcome the deficiencies in the prior art that an air cooling structure in a battery pack has a poor cooling effect and occupies a large space, and provide an air cooling structure and a battery pack.

To resolve the foregoing technical problems, the technical solutions in this application are as follows:
An air cooling structure includes:
a lower box body, provided with an air inlet and an air outlet; and
an air duct cover plate, fixed at a bottom of the lower box body, an air inlet duct and an air outlet duct that are independent from each other being formed between the air duct cover plate and the lower box body, where the air inlet duct is communicated with the air inlet, and the air outlet duct is communicated with the air outlet; the air duct cover plate is provided with a module air inlet communicated with the air inlet duct and a module air outlet communicated with the air outlet duct; and an air flow in the air inlet duct is configured to flow out of the module air inlet and then flow back to the air outlet duct through the module air outlet.

Optionally, the air duct cover plate is fixed inside the lower box body by welding.

Optionally, the air duct cover plate is provided with a baffle structure separating the air inlet duct from the air outlet duct.

Optionally, the baffle structure is a downward-concave groove formed in the air duct cover plate, and groove walls of the downward-concave groove separate the air inlet duct from the air outlet duct; and the module air inlet is provided in the air duct cover plate on one side of the downward-concave groove, and the module air outlet is provided in the air duct cover plate on the other side of the downward-concave groove.

Optionally, a plurality of module air inlets are disposed at intervals in an extension direction of the air inlet duct, a plurality of module air outlets are disposed at intervals in an extension direction of the air outlet duct, and positions of the plurality of module air inlets and positions of the plurality of module air outlets have a one-to-one correspondence with to each other.

Optionally, a plurality of air inlet ducts and a plurality of air outlet ducts are provided; where air flows that flow out of two adjacent air inlet ducts are configured to flow to a same air outlet duct located between the two adjacent air inlet ducts, and/or, an air flow that flows out of one air inlet duct is configured to flow to two air outlet ducts located on two sides of the one air inlet duct.

Optionally, each of the air inlet duct and the air outlet duct is any one of, or a combination of a plurality of, a straight-line air duct, a folded-line air duct, and an arc-shaped air duct.

Optionally, an extension wall is provided at an edge of the air duct cover plate for being connected to an inner wall of the lower box body in a sealed manner.

Optionally, an air inlet bulge disposed corresponding to a position of the air inlet of the lower box body is provided at one end of the air duct cover plate, and an air outlet bulge disposed corresponding to a position of the air outlet of the lower box body is provided at the other end of the air duct cover plate; and an internal space of the air inlet bulge is communicated with the air inlet duct, and an internal space of the air outlet bulge is communicated with the air outlet duct.

Optionally, a fastening post is further provided between the air duct cover plate and the lower box body, a lower end of the fastening post is fixed on the lower box body by welding, an upper end of the fastening post is fixed on the air duct cover plate by adhesive bonding, a threaded hole is provided in the fastening post, and a module mounting hole disposed corresponding to a position of the threaded hole is provided in the air duct cover plate for mounting a battery cell module thereon.

This application further provides a battery pack, including the foregoing air cooling structure, a battery cell module disposed above the air duct cover plate, and an upper cover covering the lower box body, where the battery cell module includes a plurality of single battery cells that are arranged at intervals and a battery cell support bracket disposed between adjacent single battery cells, and the battery cell support bracket includes a frame-shaped support body connected between two adjacent single battery cells and a flow guide sheet connected to the support body and extending into an interior of the support body; and a cooling air duct is formed between the flow guide sheet and the support body, one end of the cooling air duct is communicated with the module air inlet, and the other end thereof is communicated with the module air outlet.

Optionally, sealing foam located at a periphery of the module air inlet or a periphery of the module air outlet is provided on the air duct cover plate for sealing a gap between the battery cell module and the air duct cover plate.

The technical solution in this application has the following advantages:
1. In the air cooling structure provided in this application, the air duct cover plate is fixed on the lower box body. An integral air duct structure is formed between the air duct cover plate and the lower box body. The air duct structure includes the air inlet duct and the air outlet duct that are independent from each other. The air duct cover plate is provided with the module air inlet communicated with the air inlet duct and the module air outlet communicated with the air outlet duct. The air flow in the air inlet duct is configured to flow out of the module air inlet and then flow back to the air outlet duct through the module air outlet, to cool the battery cell module in the lower box body. The air inlet duct and the air outlet duct in the air duct structure are disposed independently, so that the battery cell module in the lower box body can be cooled in different areas, thereby improving the cooling efficiency.
2. In the air cooling structure provided in this application, compared with an extruded lower box body with an air duct inside in the prior art, the complex design of the air duct structure can be implemented, and different air duct flow directions can be formed according to cooling requirements of different positions in the battery cell module, to carry out distributed accurate heat control.
3. In the air cooling structure provided in this application, in addition to forming the air duct structure, the air duct cover plate can further enhance the structural strength of the lower box body, and it is not necessary to additionally arrange a reinforcement structure to the lower box body, so that the occupied space of the air duct structure in the lower box body is reduced, and the energy utilization of the whole pack is improved.
4. In the air cooling structure provided in this application, the air inlet duct and the air outlet duct are separated by the groove walls of the downward-concave groove. By means of the design of two adjacent air inlet ducts sharing one same air outlet duct or two adjacent air outlet ducts sharing one same air inlet duct, a quantity of downward-concave grooves in the air duct cover plate can be reduced, the costs of the air duct cover plate are reduced, the occupied space of the air duct cover plate in the lower box body is reduced.
5. In the air cooling structure provided in this application, each of the air inlet duct and the air outlet duct is any one of, or a combination of a plurality of, a straight-line air duct, a folded-line air duct, and an arc-shaped air duct, and more complex air duct design can be implemented inside the lower box body. Compared with a manner in the prior art that an air inlet duct and an air outlet duct can only be designed to be straight-line air ducts, the structural form of an air duct is greatly enriched, an air duct shape is kept from restricting an arrangement position of the battery cell module in the lower box body, and an arrangement manner of the battery cell module in the lower box body can be more flexible.
6. In the battery pack provided in this application, the air flow in the air inlet duct is configured to flow out of the module air inlet, flow to the module air outlet along the cooling air duct in the battery cell support bracket, and flow back to the air outlet duct. By means of such air duct design, sides of the single battery cells are cooled, the cooling efficiency is improved, and the battery cell cooling requirement under high power can be met.

### BRIEF DESCRIPTION OF THE DRAWINGS

To describe the technical solutions in specific embodiments of this application or the prior art more clearly, the following briefly introduces the accompanying drawings required for describing the specific embodiments or the prior art. Apparently, the accompanying drawings in the following description show some embodiments of this application, and a person of ordinary skill in the art may still derive other drawings from these accompanying drawings without creative efforts.
FIG. 1 is a schematic structural diagram of an overall first surface of a lower box body and an air duct cover plate according to an embodiment of this application;
FIG. 2 is a schematic structural diagram of an overall second surface of a lower box body and an air duct cover plate according to an embodiment of this application;
FIG. 3 is a schematic exploded view of a lower box body and an air duct cover plate according to an embodiment of this application;
FIG. 4 is a schematic structural diagram of a lower box body according to an embodiment of this application;
FIG. 5 is a schematic structural diagram of an air duct cover plate according to an embodiment of this application;
FIG. 6 is a schematic diagram of air duct flow directions of an air cooling structure according to an embodiment of this application;
FIG. 7 is a schematic structural diagram of a fastening post according to an embodiment of this application;
FIG. 8 is a schematic structural diagram of sealing foam according to an embodiment of this application;
FIG. 9 is a schematic diagram of air duct flow directions of another air cooling structure according to an embodiment of this application;
FIG. 10 is a schematic diagram of a connection relationship between a battery cell support bracket and a battery cell according to an embodiment of this application; and
FIG. 11 is a schematic structural diagram of a battery cell support bracket according to an embodiment of this application.

Reference numerals: 1, lower box body; 101, air inlet; 102, air outlet; 2, air duct cover plate; 201, air inlet duct; 202, air outlet duct; 203, module air inlet; 204, module air outlet; 205, downward-concave groove; 206, extension wall; 207, air inlet bulge; 208, air outlet bulge; 209, module mounting hole; 3, fastening post; 5, battery cell module; 51, single battery cell; 52, battery cell support bracket; 521, support body; 522, flow guide sheet; 523, cooling air duct; 6, sealing foam; and 7, lower box body fixing pin.

### DETAILED DESCRIPTION

The following clearly and completely describes the technical solutions in this application with reference to the accompanying drawings. Apparently, the embodiments described below are some embodiments of this application rather than all the embodiments. All other embodiments obtained by persons of ordinary skill in the art based on embodiments of this application without creative efforts shall fall within the protection scope of this application.

In the description of this application, it needs to be noted that orientation or location relationships indicated by terms "center", "up", "down", "left", "right", "vertical", "horizontal", "inside", and "outside" are based on orientation or location relationships shown in the accompanying drawings, and are only used to facilitate description of this application and simplify description, but are not used to indicate or imply that the apparatuses or elements must have specific orientations or are constructed and operated by using specific orientations, and therefore, cannot be understood as a limitation to this application. In addition, the terms "first", "second", and "third" are used only for description, but are not intended to indicate or imply relative importance.

In the description of this application, it needs to be noted that unless otherwise expressly specified and defined, "mounted", "connected", and "connection" should be understood in a broad sense, for example, fixedly connected, detachably connected, or integrally connected; or mechanically connected, or electrically connected; or connected directly or through an intermediate, or two elements communicated internally. For persons skilled in the art, specific meanings of the terms in the present invention should be understood according to specific conditions.

In addition, the technical features involved in different embodiments of the present application described below can be combined with each other as long as they do not constitute a conflict between them.

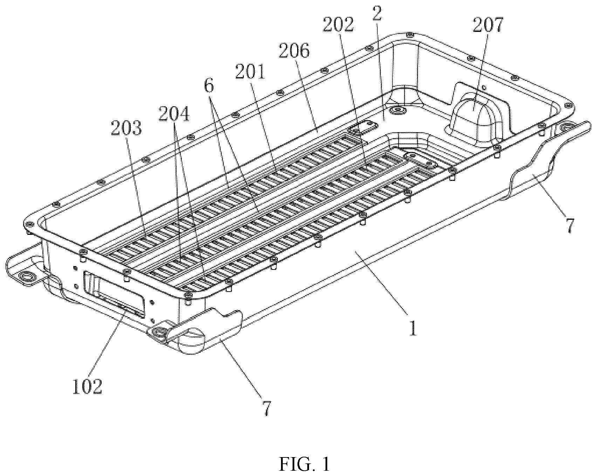

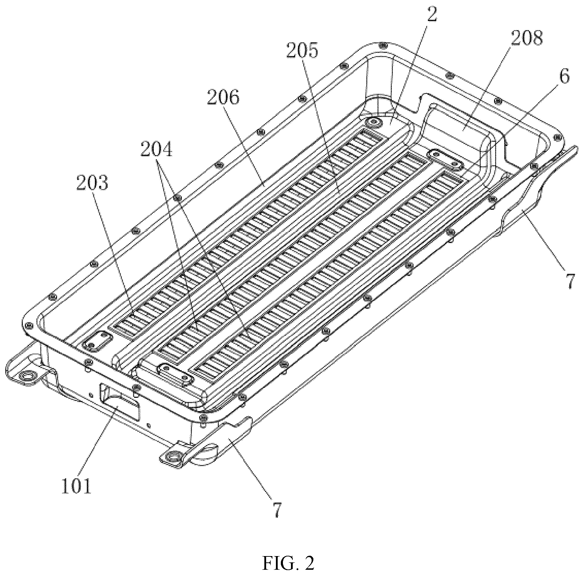

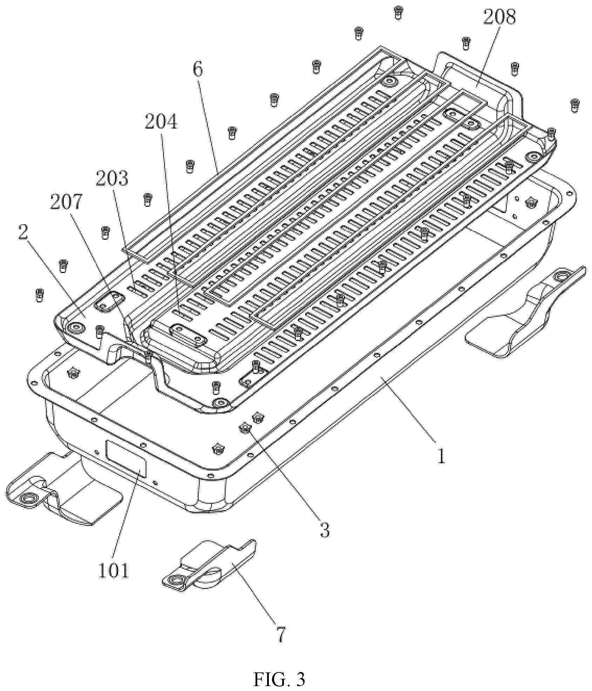

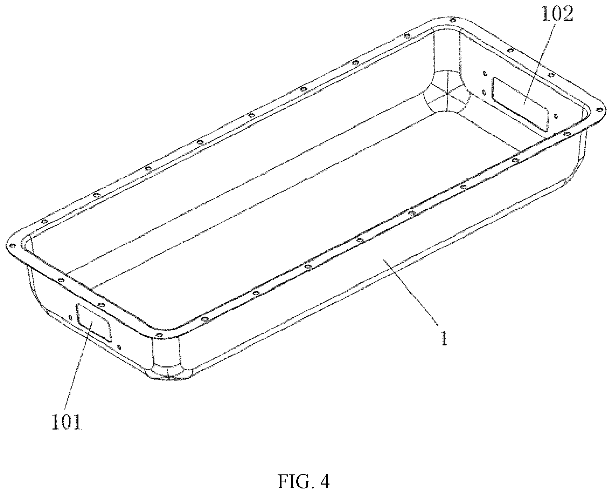

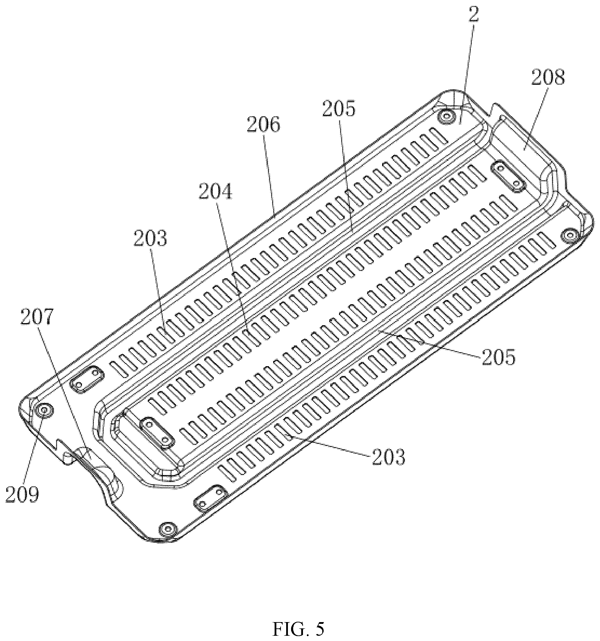

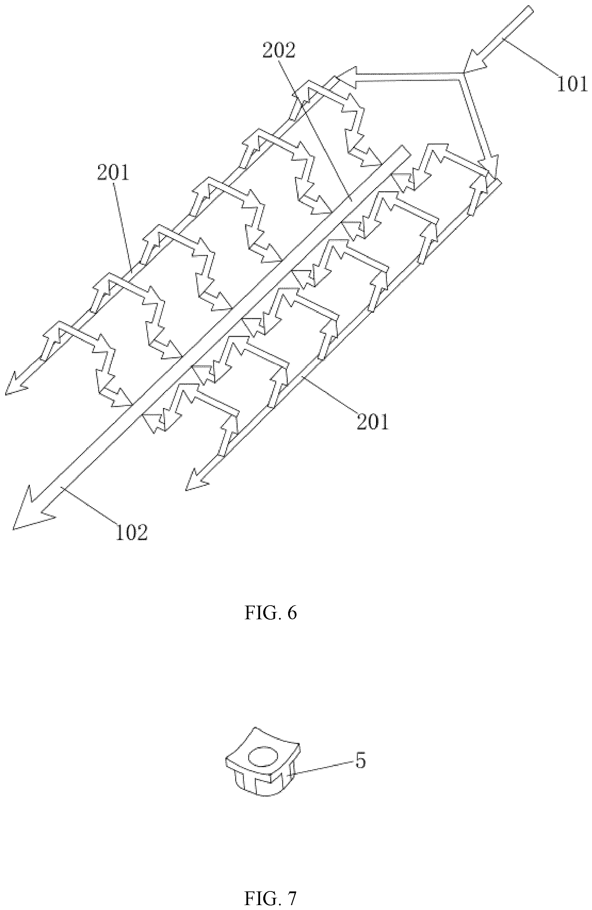

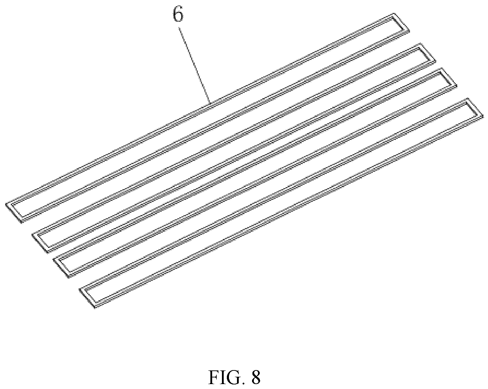

An air cooling structure shown in FIG. 1 to FIG. 8 includes a lower box body 1 and an air duct cover plate 2. The lower box body 1 includes a bottom plate and surrounding side plates on four sides. The side plates and the bottom plate are integrally formed. The side plates surround to form an accommodating space on the bottom plate. Two side plates on two opposite sides on the lower box body 1 are respectively provided with an air inlet 101 and an air outlet 102. An air duct cover plate 2 is fixed at a bottom of the lower box body 1. An air inlet duct 201 and an air outlet duct 202 that are independent from each other is formed between the air duct cover plate 2 and the lower box body 1. The air inlet duct 201 is communicated with the air inlet 101, and the air outlet duct 202 is communicated with the air outlet 102. The air duct cover plate 2 is provided with a module air inlet 203 communicated with the air inlet duct 201 and a module air outlet 204 communicated with the air outlet duct 202. By means of such an air cooling structure, the air duct cover plate 2 and the lower box body 1 form an integral air duct structure. The integral air duct structure includes the air inlet duct 201 and the air outlet duct 202 that are independent from each other. The air flow in the air inlet duct 201 is configured to flow out of the module air inlet 203 and cool parts in the lower box body 1, and then flow back to the air outlet duct 202 through the module air outlet 204, so that the parts in the lower box body 1 can be cooled in different areas, thereby improving the cooling efficiency.

In this embodiment, the lower box body 1 and the air duct cover plate 2 are both made of steel. The lower box body 1 is obtained through processing by using a sheet metal forming process. It is not necessary to arrange a complex structure on the bottom plate of such a lower box body 1, the overall structure is simple, stamping forming can be formed in large batches, and the formation efficiency is high. The air duct cover plate 2 is formed by using a sheet metal integration process. A complex air duct shape can be formed in the air duct cover plate 2. The air duct cover plate 2 is welded to the lower box body 1 to form a sealed air duct structure, so that the complex design of the air duct structure is implemented, different air duct flow directions can be formed according to cooling requirements of different positions, to carry out distributed accurate heat control. In addition, the shape of the air duct cover plate 2 can further enhance the structural strength of the lower box body 1, and it is not necessary to additionally arrange a reinforcement structure to the lower box body 1, so that the occupied space of the air duct structure in the lower box body 1 is reduced, and the energy utilization of the whole pack is improved.

In this embodiment, the air duct cover plate 2 is provided with a baffle structure separating the air inlet duct 201 from the air outlet duct 202. After the air duct cover plate 2 is welded in the lower box body 1, a lower end of the baffle structure is tightly pressed against the bottom plate of the lower box body 1, to separate the air inlet duct 201 and the air outlet duct 202. In an alternative implementation, a baffle structure may further be formed on the bottom plate of the lower box body 1, and an upper end of the baffle structure is connected to the air duct cover plate 2 in a sealed manner.

Specifically, the baffle structure is a downward-concave groove 205 integrally formed in the air duct cover plate 2. Groove walls of the downward-concave groove 205 separate the air inlet duct 201 and the air outlet duct 202. The module air inlet 203 is provided in the air duct cover plate 2 on one side of the downward-concave groove 205, and the module air outlet 204 is provided in the air duct cover plate 2 on the other side of the downward-concave groove 205. By means of the design of forming the downward-concave groove 205 in the air duct cover plate 2 to separate the air inlet duct 201 and the air outlet duct 202, the structure is simple, and the processing and formation are easy.

In this embodiment, a plurality of module air inlets 203 are disposed at intervals in an extension direction of the air inlet duct 201. A plurality of module air outlets 204 are disposed at intervals in an extension direction of the air outlet duct 202. Positions of the plurality of module air inlets 203 and positions of the plurality of module air outlets 204 have a one-to-one correspondence with each other. When the lower box body 1 and the air duct cover plate 2 are used in a battery pack, a battery cell module 5 is placed above the air duct cover plate 2. The battery cell module 5 includes a plurality of single battery cells 51 that are arranged at intervals and a battery cell support bracket 52 disposed between adjacent single battery cells 51. A position of the single battery cell 51 on the air duct cover plate 2 is located on the air duct cover plate 2 between two adjacent module air inlets 203 and corresponding two adjacent module air outlets 204. The battery cell support bracket 52 is placed between one corresponding pair of the module air inlet 203 and the module air outlet 204. The air flow that flows out of the module air inlet 203 is configured to cool a side with the largest surface area of the single battery cell 51, so that a cooling effect of the single battery cell 51 can be improved, and the battery cell cooling requirement under high power is met.

In some implementations of this embodiment, the air inlet duct 201 and the air outlet duct 202 are both straight-line air ducts and are disposed parallel to each other. Two air inlet ducts 201 are provided, and one air outlet duct 202 is provided. The two air inlet ducts 201 are located on two opposite sides of the air outlet duct 202. A width of the air outlet duct 202 is a sum of widths of the two air inlet ducts 201. One row of module air inlets 203 are provided in a length direction of the air inlet duct 201, and two rows of module air outlets 204 are provided in a length direction of the air outlet duct 202. One row of module air outlets 204 and one row of module air inlets 203 in one air inlet duct 201 are disposed having a one-to-one correspondence with each other, and the other row of module air outlets 204 and one row of module air inlets 203 in the other air inlet duct 201 are disposed having a one-to-one correspondence with each other. By means of such design of the air duct structure, it is suitable to arrange double rows of battery cell modules 5 in the lower box body 1. Each row of battery cell modules 5 correspond to one pair of the air inlet duct 201 and the air outlet duct 202. After air enters through the air inlet ducts 201 on two sides, air flows converge into an air outlet flow channel through the module air inlet 203 and the module air outlet 204, so that the cooling efficiency can be improved. Furthermore, because two air inlet flow channels are provided, one of the air inlet flow channels may be selected as required for air to enter, or air intake amounts in the two air inlet flow channels are controlled to be different, so that the battery cell module 5 in different areas are cooled according to different areas. When the temperature of the battery cell module 5 in one of the areas in the lower box body 1 is excessively high and requires quick cooling, an air flow may be controlled to centrally enter a corresponding air inlet flow channel, so that the cooling efficiency is improved, and distributed control of battery cell thermal management is carried out. In an alternative implementation, three or fewer air inlet ducts 201 may be provided, and the quantity is adaptively adjusted according to a quantity of rows of battery cell modules 5 in the lower box body 1; or one air inlet duct 201 and two air outlet ducts 202 may be provided, and the two air outlet ducts 202 are respectively located on two sides of an air inlet channel.

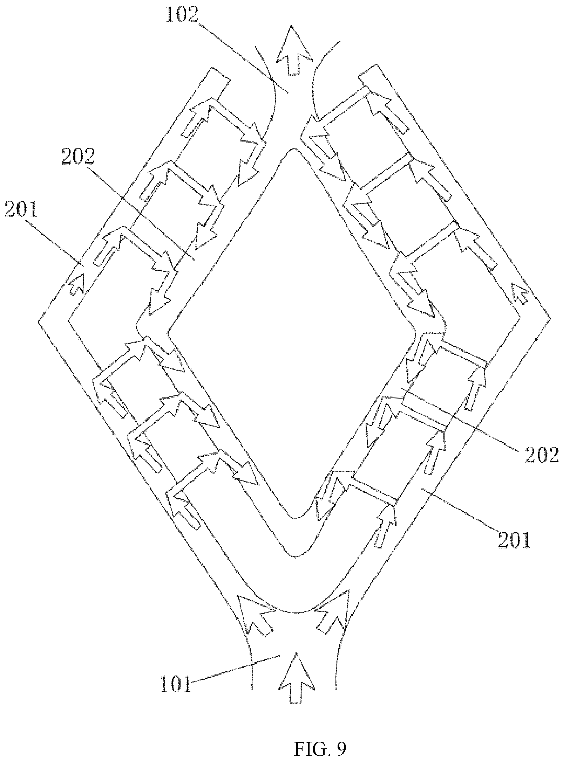

In some other implementations of this embodiment, referring to FIG. 9, the air inlet duct 201 and the air outlet duct 202 may be folded-line air ducts. Two air inlet ducts 201 and two air outlet ducts 202 are provided. The two air inlet ducts 201 form a rhomboid, the two air outlet ducts 202 form a rhomboid, and the two air inlet ducts 201 are located on outer sides of the two air outlet ducts 202. A separation structure (not shown) is provided between the air inlet duct 201 and the air outlet duct 202. It may be understood here that each of the air inlet duct 201 and the air outlet duct 202 may be an arc-shaped air duct, or have a complex air duct shape formed by combining a straight-line air duct, a folded-line air duct, and an arc-shaped air duct. The air duct cover plate 2 may be manufactured in stamping forming manner to obtain an air duct with any foregoing shape. By means of such design, more complex air duct design can be implemented inside the lower box body 1. Compared with a manner in the prior art that an air inlet duct 201 and an air outlet duct 202 can only be designed to be straight-line air ducts, the structural form of an air duct is greatly enriched, an air duct shape is kept from restricting an arrangement position of the battery cell module 5 in the lower box body 1, and an arrangement manner of the battery cell module 5 in the lower box body 1 can be more flexible.

In this embodiment, an extension wall 206 is provided at an edge of the air duct cover plate 2 for being connected to an inner wall of the lower box body 1 in a sealed manner, and the extension wall 206 is disposed to facilitate the sealing performance of the air duct cover plate 2 and the lower box body 1 after welding. An air inlet bulge 207 disposed corresponding to a position of the air inlet 101 of the lower box body 1 is provided at one end of the air duct cover plate 2. An air outlet bulge 208 disposed corresponding to a position of the air outlet 102 of the lower box body 1 is provided at the other end of the air duct cover plate 2. An internal space of the air inlet bulge 207 is communicated with the air inlet duct 201, and an internal space of the air outlet bulge 208 is communicated with the air outlet duct 202.

In this embodiment, a fastening post 3 is further provided between the air duct cover plate 2 and the lower box body 1. A lower end of the fastening post 3 is fixed on the lower box body 1 by welding. An upper end of the fastening post 3 is fixed on the air duct cover plate 2 by adhesive bonding. A threaded hole is provided in the fastening post 3. A module mounting hole 209 disposed corresponding to a position of the threaded hole is provided in the air duct cover plate 2 for mounting a battery cell module 5 thereon.

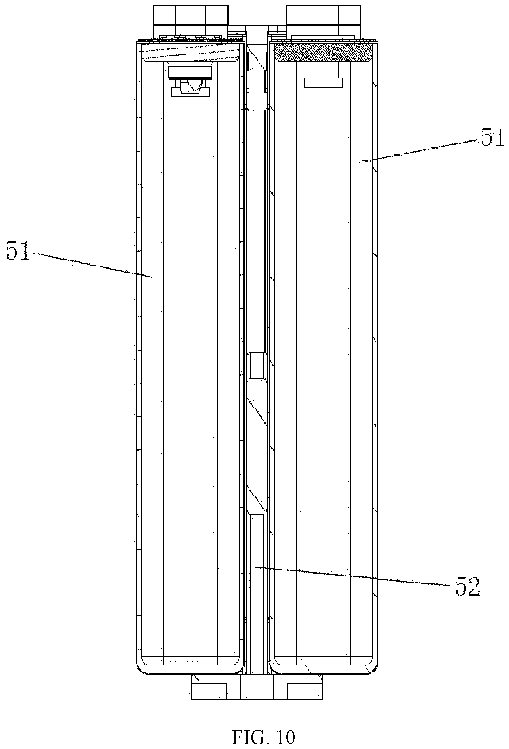

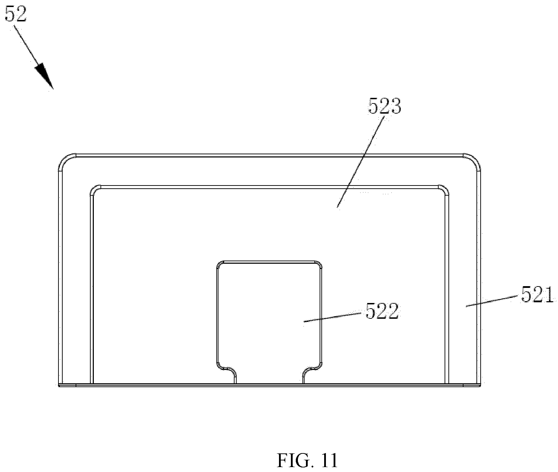

An embodiment of this application further provides a battery pack, including the foregoing lower box body 1 and air duct cover plate 2, a battery cell module 5 disposed above the air duct cover plate 2, and an upper cover 4 covering the lower box body 1. As shown in FIG. 10, the battery cell module 5 includes a plurality of single battery cells 51 that are arranged at intervals and a battery cell support bracket 52 disposed between adjacent single battery cells 51. As shown in FIG. 11, the battery cell support bracket 52 includes a frame-shaped support body 521 connected between two adjacent single battery cells 51 and a flow guide sheet 522 connected to the support body 521 and extending into an interior of the support body 521. A cooling air duct 523 is formed between the flow guide sheet 522 and the support body 521. Two opposite sides of the flow guide sheet 522 are attached to the two adjacent single battery cells 51. The cooling air duct 523 is arc-shaped. One end of the cooling air duct 523 is communicated with the module air inlet 203, and the other end thereof is communicated with the module air outlet 204. Sealing foam 6 located at a periphery of the module air inlet 203 or a periphery of the module air outlet 204 is provided on the air duct cover plate 2 for sealing a gap between the battery cell module 5 and the air duct cover plate 2.

The cooling principle of the battery pack is as follows: After entering the air inlet 101 of the lower box body 1, air enters the two air inlet ducts 201 on two sides. The air flow in the air inlet duct 201 is configured to flow out of the module air inlet 203 in the air duct cover plate 2, flow to the module air outlet 204 through the cooling air duct 523 in the battery cell support bracket 52, flow back to the air outlet duct 202, and then flow out of the air outlet 102 of the lower box body 1. By means of such air duct design, sides of the single battery cells 51 are cooled, the cooling efficiency is improved, and the battery cell cooling requirement under high power can be met. Moreover, the battery cells can be cooled in different areas according to cooling requirements of battery cells at different positions in the battery pack, and distributed control of thermal management is carried out.

Obviously, the foregoing embodiments are merely examples for clear description, rather than a limitation to implementations. For a person of ordinary skill in the art, other changes or variations in different forms may also be made based on the foregoing description. All implementations cannot and do not need to be exhaustively listed herein. Obvious changes or variations that are derived there from still fall within the protection scope of the invention of the present invention.

## Claims

1. An air cooling structure, **characterized by** comprising:
a lower box body (1), provided with an air inlet (101) and an air outlet (102); and
an air duct cover plate (2), fixed at a bottom of the lower box body (1), an air inlet duct (201) and an air outlet duct (202) that are independent from each other being formed between the air duct cover plate (2) and the lower box body (1), wherein the air inlet duct (201) is communicated with the air inlet (101), and the air outlet duct (202) is communicated with the air outlet (102); the air duct cover plate (2) is provided with a module air inlet (203) communicated with the air inlet duct (201) and a module air outlet (204) communicated with the air outlet duct (202); and an air flow in the air inlet duct (201) is configured to flow out of the module air inlet (203) and then flow back to the air outlet duct (202) through the module air outlet (204).

2. The air cooling structure according to claim 1, **characterized in that** the air duct cover plate (2) is fixed inside the lower box body (1) by welding.

3. The air cooling structure according to claim 2, **characterized in that** the air duct cover plate (2) is provided with a baffle structure separating the air inlet duct (201) from the air outlet duct (202).

4. The air cooling structure according to claim 3, **characterized in that** the baffle structure is a downward-concave groove (205) formed in the air duct cover plate (2), and groove walls of the downward-concave groove (205) separate the air inlet duct (201) from the air outlet duct (202); and the module air inlet (203) is provided in the air duct cover plate (2) on one side of the downward-concave groove (205), and the module air outlet (204) is provided in the air duct cover plate (2) on the other side of the downward-concave groove (205).

5. The air cooling structure according to any one of claims 1 to 4, **characterized in that** a plurality of module air inlets (203) are disposed at intervals in an extension direction of the air inlet duct (201), a plurality of module air outlets (204) are disposed at intervals in an extension direction of the air outlet duct (202), and positions of the plurality of module air inlets (203) and positions of the plurality of module air outlets (204) have a one-to-one correspondence with each other.

6. The air cooling structure according to any one of claims 1 to 4, **characterized in that** a plurality of air inlet ducts (201) and a plurality of air outlet ducts (202) are provided; wherein air flows that flow out of two adjacent air inlet ducts (201) are configured to flow to a same air outlet duct (202) located between the two adjacent air inlet ducts (201), and/or, an air flow that flows out of one air inlet duct (201) is configured to flow to two air outlet ducts (202) located on two sides of the one air inlet duct (201).

7. The air cooling structure according to any one of claims 1 to 4, **characterized in that** each of the air inlet duct (201) and the air outlet duct (202) is any one of, or a combination of a plurality of, a straight-line air duct, a folded-line air duct, and an arc-shaped air duct.

8. The air cooling structure according to any one of claims 1 to 4, **characterized in that** an extension wall (206) is provided at an edge of the air duct cover plate (2) for being connected to an inner wall of the lower box body (1) in a sealed manner.

9. The air cooling structure according to any one of claims 1 to 4, **characterized in that** an air inlet bulge (207) disposed corresponding to a position of the air inlet (101) of the lower box body (1) is provided at one end of the air duct cover plate (2), and an air outlet bulge (208) disposed corresponding to a position of the air outlet (102) of the lower box body (1) is provided at the other end of the air duct cover plate (2); and an internal space of the air inlet bulge (207) is communicated with the air inlet duct (201), and an internal space of the air outlet bulge (208) is communicated with the air outlet duct (202).

10. The air cooling structure according to any one of claims 1 to 4, **characterized in that** a fastening post (3) is further provided between the air duct cover plate (2) and the lower box body (1), a lower end of the fastening post (3) is fixed on the lower box body (1) by welding, an upper end of the fastening post (3) is fixed on the air duct cover plate (2) by adhesive bonding, a threaded hole is provided in the fastening post (3), and a module mounting hole (209) disposed corresponding to a position of the threaded hole is provided in the air duct cover plate (2) for mounting a battery cell module (5) thereon.

11. A battery pack, comprising the air cooling structure according to any one of claims 1 to 10, a battery cell module (5) disposed above the air duct cover plate (2), and an upper cover covering the lower box body (1), **characterized in that**
the battery cell module (5) comprises a plurality of single battery cells (51) that are arranged at intervals and a battery cell support bracket (52) disposed between adjacent single battery cells (51), and the battery cell support bracket (52) comprises a frame-shaped support body (521) connected between two adjacent single battery cells (51) and a flow guide sheet (522) connected to the support body (521) and extending into an interior of the support body (521); and a cooling air duct (523) is formed between the flow guide sheet (522) and the support body (521), one end of the cooling air duct (523) is communicated with the module air inlet (203), and the other end thereof is communicated with the module air outlet (204).

12. The battery pack according to claim 11, **characterized in that** sealing foam (6) located at a periphery of the module air inlet (203) or a periphery of the module air outlet (204) is provided on the air duct cover plate (2) for sealing a gap between the battery cell module (5) and the air duct cover plate (2).
